Europäisches Patentamt

European Patent Office

Office européen des brevets

(11) Numéro de publication: **0 315 504 B1**

(19)
(12)

# FASCICULE DE BREVET EUROPEEN

(45) Date de publication de fascicule du brevet: **16.12.92**   (51) Int. Cl.⁵: **B60N 2/00**, B60N 2/44

(21) Numéro de dépôt: **88402680.8**

(22) Date de dépôt: **24.10.88**

(54) **Siège de véhicule automobile comportant des ailes latérales.**

(30) Priorité: **05.11.87 FR 8715363**

(43) Date de publication de la demande:
**10.05.89 Bulletin  89/19**

(45) Mention de la délivrance du brevet:
**16.12.92 Bulletin  92/51**

(84) Etats contractants désignés:
**BE DE ES FR GB IT NL SE**

(56) Documents cités:
**DE-A- 2 721 539**
**DE-A- 2 740 268**
**FR-A- 1 373 267**
**FR-A- 2 276 798**

(73) Titulaire: **CESA COMPAGNIE EUROPEENNE
DE SIEGES POUR AUTOMOBILES
20, rue Paul-Vaillant-Couturier
F-92300 Levallois-Perret(FR)**

(72) Inventeur: **Deley, Serge
1, Route d'Audincourt
F-25230 Seloncourt(FR)**
Inventeur: **Fourrey, François
32, Rue du Petit Chênois
F-25200 Montbeliard(FR)**

(74) Mandataire: **Mestre, Jean et al
c/o CABINET LAVOIX 2, place d'Estienne
d'Orves
F-75441 Paris Cédex 09(FR)**

## Description

La présente invention concerne un siège de véhicule automobile muni d'ailes latéraux sur son dossier et/ou son assise. Il est généralement nécessaire de procurer à l'occupant du siège une possibilité de réglage de la position angulaire des ailes de manière à ce que le siège puisse être adapté à la morphologie exacte de l'occupant (voir par exemple FR-A-2 276 798, correspondant au préambule de la revendication 1).

De nombreux mécanismes sont déjà connus qui permettent de régler la position angulaire des ailes latérales d'un siège, mais ces mécanismes ont pour inconvénient de comporter un nombre important de pièces dont les couplages respectifs prennent facilement du jeu et les sièges classiques présentent ainsi l'inconvénient de ne pas permettre un réglage facile de leurs composants.

La présente invention a pour but de réaliser un siège de véhicule automobile dont le dispositif de réglage des ailes latérales comporte un petit nombre de pièces et, qui donc est peu coûteux, facile à manoeuvrer et dont le montage est relativement simple.

L'invention a en effet pour objet un siège de véhicule automobile comportant sur au moins un élément latéral de son armature un fil d'aile pivotant à ses deux extrémités par rapport audit élément latéral agissant comme élément de support et relié à un moyen de réglage de sa position angulaire mobile axialement sur une vis de commande rotative portée par ledit élément de support, caractérisé en ce que les extrémités du fil d'aile sont montées pivotantes dans des fentes pratiquées dans un des éléments latérals de l'armature et en ce que le moyen de réglage comprend une partie formant crochet venant s'emboîter directement sur le fil d'aile et une partie formant écrou se déplaçant sur la vis de commande correspondante.

Selon d'autres caractéristiques :
- Le fil d'aile comporte dans sa partie médiane un décrochement de réception de la partie formant crochet de l'organe de réglage ;
- La partie formant crochet du moyen de reglage comporte deux crochets situés de part et d'autre d'une lame élastique d'appui sur le fil d'aile correspondant destinée à maintenir les extrémités du fil en position dans les fentes ;
- Les vis de commande de chacun des fils d'aile sont solidaires en rotation d'un câble de transmission qui les relie.

Le dispositif de réglage très simple permet de régler simultanément les deux ailes par une simple manoeuvre de sorte que l'écartement des ailes correspond à la dimension souhaitée par l'utilisateur.

L'invention sera décrite plus en détail ci-dessous en se référant aux dessins annexés, donnés uniquement à titre d'exemples et dans lesquels :
- La figure 1 est une vue générale du dispositif de réglage monté sur une armature de siège ;
- la figure 2 est une vue en perspective d'un premier mode de réalisation d'un organe de réglage fixé sur un fil d'aile ;
- la figure 3 est une vue en perspective d'un deuxième mode de réalisation de l'organe de réglage ;
- la figure 3A est une vue d'une variante de la butée de verrouillage de la Fig. 3 ;
- la figure 4 est une vue en coupe de la vis de commande montée sur l'armature.

Les ailes latérales réglables d'un dossier et/ou d'une assise de siège sont généralement réalisées de la même manière. On ne décrira donc ci-dessous pour simplifier que des ailes de dossier, les ailes d'assise étant semblables.

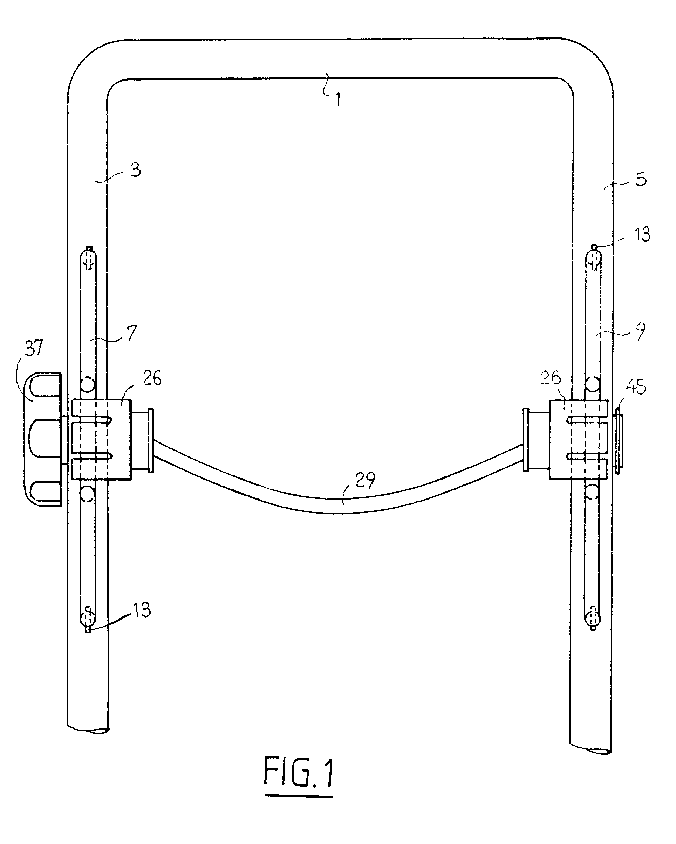

On a représenté figure 1, un dossier de siège de véhicule comportant un tube d'armature 1 recourbé en U dont les éléments latéraux 3, 5 supportent chacun un fil d'aile respectivement 7, 9.

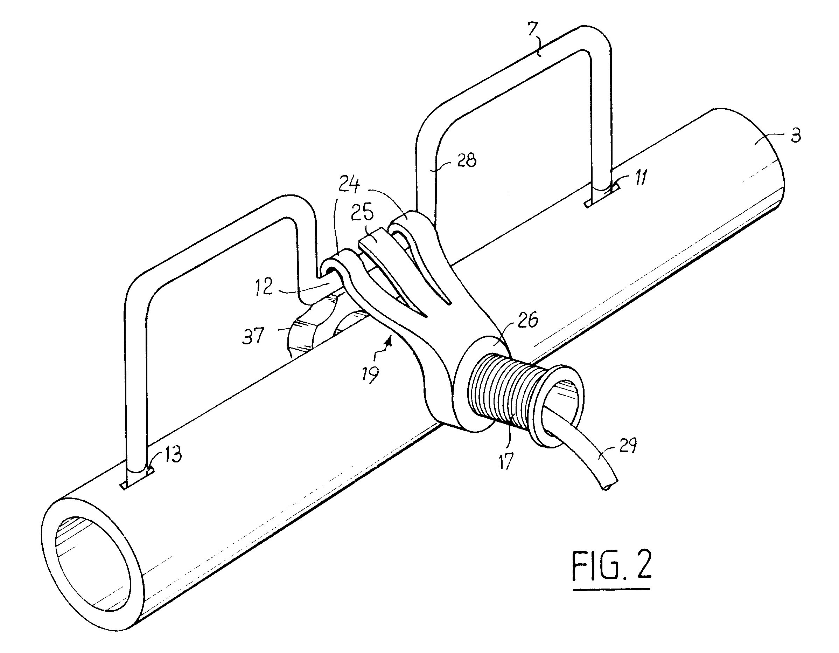

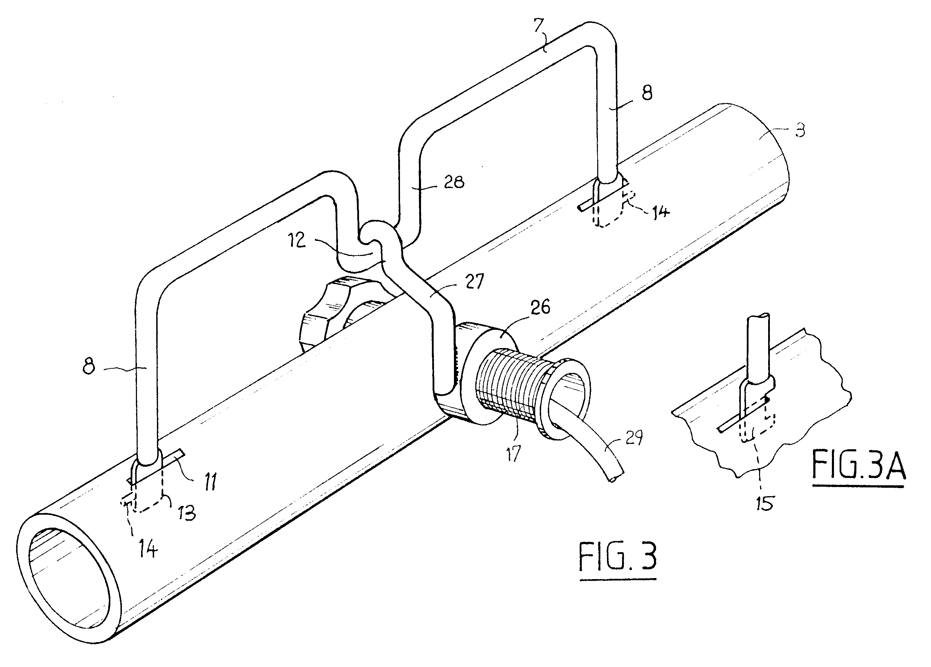

Selon l'invention, chaque élément latéral d'armature 3, 5 comprend deux trous ou fentes 11 (voir aussi fig. 2) dans lesquels viennent se fixer les extrémités 13 des fils d'aile 7,9. Les fentes 11 ont une section rectangulaire et les extrémités 13 des fils d'aile 7, 9 sont aplaties de manière correspondante, de sorte qu'après avoir mis en place les fils par enfoncement vertical, l'extrémité ronde de chaque fil d'aile 7, 9 vienne en butée sur l'élément latéral d'armature respectif. Dans le mode de réalisation représenté les fils d'aile 7, 9 sont en forme de U renversé (Fig.2 et 3) et font saillie à partir de leur élément latéral d'armature 3, 5 respectif. Ils comportent dans leur partie sensiblement médiane, un décrochement 12 dirigé vers l'intérieur en direction de l'armature.

Les moyens de réglage de position angulaire de chacun des fils d'aile étant semblables on ne décrira que l'un d'entre eux, par exemple celui qui est relié au fil d'aire 7.

Le moyen de réglage de la position angulaire du fil d'aile 7 est constitué par une vis de commande 17 directement montée sur l'élément latéral d'armature 3 et par un organe de réglage 19 monté mobile axialement sur la vis 17 et venant se fixer sur le fil d'aile 7. L'organe de réglage, de référence générale 19, est constitué par une partie formant crochet s'accrochant directement sur le fil d'aile à l'endroit du décrochement 12 et une partie formant écrou 26, de préférence d'un seul tenant avec l'autre partie, se déplaçant axialement sur la vis de commande 17.

La partie formant crochet comporte deux crochets 24 situés de part et d'autre d'une lame élastique 25 qui vient s'appuyer sur le fil d'aile 7 en vue de maintenir les extrémités 13 dudit fil d'aile en position dans les fentes 11 de l'élément latéral d'armature 3. Les crochets 24 viennent respectivement s'emboîter sur le fil d'aile 7 dans le décrochement 12, en entourant le fil sur plus d'une demi-circonférence de telle manière que lors de l'écartement des ailes, ils repoussent le fil d'aile vers l'extérieur, et lors du rapprochement des ailes ils tirent le fil d'aile vers l'intérieur de sorte qu'il n'existe pas de déplacement relatif entre les crochets et le fil d'aile.

Le déplacement longitudinal de la partie formant crochet de l'organe de réglage est limité par les parties latérales 28 du décrochement 12 du fil d'aile. La lame élastique 25 reste en appui sur le fil d'aile 7 quelle que soit la position angulaire de ce dernier, maintenant ainsi les extrémités 13 de ce fil bien engagées dans les fentes 11 de l'élément d'armature 3.

Selon une variante de réalisation, représentée sur les figures 3 et 3A, du moyen de réglage les extrémités 13 du fil d'aile comportent une butée de verrouillage radial en position dans la fente 11 correspondante. Cette butée est constituée soit par un ergot 14 en saillie vers l'extérieur du fil, soit par une encoche 15 ouverte vers l'extérieur. Dans ce cas, le fil d'aile 7 est monté en tension sur l'élément 3 de l'armature en jouant sur l'élasticité de ses parties verticales 8. Lorsque les extrémités 13 ont pénétré dans les fentes 11, l'ergot 14 ou le bord inférieur de l'encoche 15, suivant le cas, vient en appui sur la face interne de l'élément d'armature à l'extrémité de la fente 11, empêchant les extrémités 13 de sortir des fentes et assurant ainsi une retenue radiale du fil d'aile 7.

L'organe 19 peut alors ne pas comporter de lame élastique. Il peut même ne comporter, comme le montre la figure 3, qu'un unique crochet 27 fixé par tout moyen approprié à l'écrou 26 ou d'une seule pièce avec ce dernier. Ce crochet, comme les crochets 24, est emboîté sur le fil d'aile dans un décrochement central 12 et entoure ce fil sur plus d'une demi-circonférence de sorte qu'il en est rigoureusement solidaire et l'entraine dans ses déplacements.

Quel que soit le moyen de réglage utilisé pour le fil d'aile, il est possible de monter de manière symétrique le même moyen de réglage sur le fil d'aile 9, et les deux moyens sont reliés par un câble souple 29 fixé à l'intérieur de chacune des vis de commande 17.

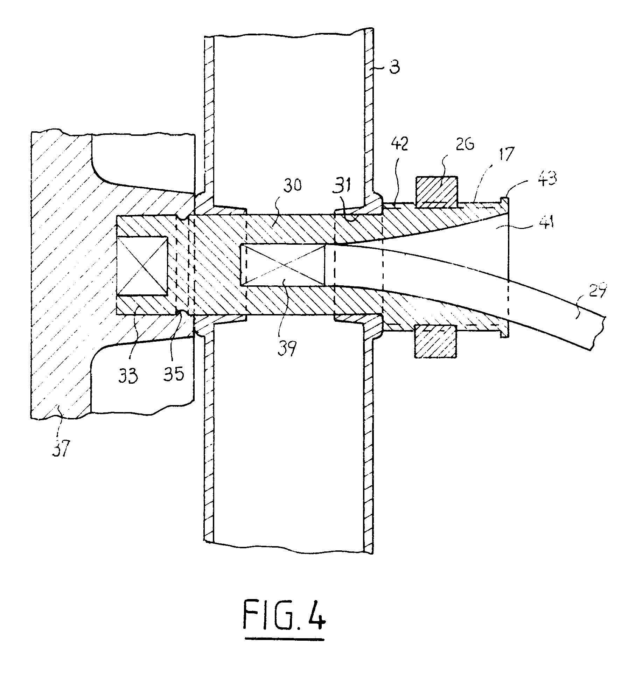

Chaque vis de commande 17 est prolongée par une tige 30 (voir figure 4) qui traverse l'élément d'armature 3 et tourillonne dans deux trous 31 pratiqués dans cet élément d'armature. De manière recommandée les trous peuvent être réalisés par fluoperçage.

La vis 17 comporte à son extrémité située à l'extérieur du siège, à l'opposé à l'écrou 26 respectivement un plat 33 et une gorge torique 35 permettant à la fois d'indexer en rotation et de retenir en position un bouton de manoeuvre 37 après emboîtage de ce dernier sur la vis de commande. La face externe de la vis comporte un filetage 42 sur lequel est engagée la partie formant écrou 26 du moyen de réglage et la vis est terminée par une butée d'arrêt de translation 43 dudit écrou.

A l'intérieur de cette vis, est de préférence formée une découpe carrée 39 dans laquelle peut venir s'engager l'extrémité carrée correspondante du câble de liaison 29 qui est ainsi rigoureusement solidaire en rotation de la vis. Cette découpe carrée 39 est complétée par une découpe tronconique 41 s'évasant vers l'intérieur du profil et permettant au câble de liaison 29 d'amorcer sa courbure dès l'intérieur de la vis.

Lorsqu'on effectue un réglage des deux côtés de l'élément de siège, l'une des vis, par exemple la vis montée sur l'élément d'armature 5, ne comporte pas de bouton de manoeuvre mais un jonc d'arrêt 45 placé dans la gorge torique pour maintenir la vis en translation. Le sens des pas de vis de la vis de commande et de l'écrou du moyen de réglage monté sur le fil d'aile 9 de l'élément d'armature latéral 5 sont inversés par rapport à ceux du moyen de réglage monté sur l'élément latéral d'armature 3.

Le fonctionnement des moyens de réglage d'inclinaison des ailes latérales est le suivant.

Lorsqu'on actionne le bouton de manoeuvre 37 dans un premier sens de rotation, les deux écrous 26 des moyens de réglage s'écartent l'un de l'autre entraînés par l'intermédiaire des vis 17 reliées entre elles par le câble souple de liaison 29, provoquant ainsi le basculement des fils d'ailes respectifs 7, 9 vers l'extérieur. De même, lorsqu'on actionne suivant l'autre sens de rotation le bouton de manoeuvre 37, les parties formant écrou 26 des deux moyens de réglage se rapprochent l'un de l'autre, provoquant ainsi le basculement vers l'intérieur des fils d'ailes 7 et 9 et donc le resserrement des ailes latérales.

Les deux ailes latérales du dossier et/ou de l'assise peuvent ainsi être placées exactement dans la position souhaitée par une simple manoeuvre du bouton de commande 37. L'occupant du siège peut donc adapter à tout moment la position de ces ailes et donner au siège la forme qu'il juge la plus confortable.

Il est clair que le dispositif étant parfaitement symétrique, le bouton de manoeuvre peut être monté sur le montant latéral de gauche comme représenté ou sur le montant de droite selon les utilisations et notamment selon la position du siège dans le véhicule.

## Revendications

1.  Siège de véhicule automobile comportant sur au moins un élément latéral (3,5) de son armature (1) un fil d'aile (7,9) pivotant à ses deux extrémités (13) par rapport audit élément latéral (3,5) agissant comme élément de support, et relié à un organe de réglage (19) de sa position angulaire, mobile axialement sur une vis de commande (17) rotative portée par ledit élément de support, caractérisé en ce que les extrémités (13) de chaque fil d'aile (7,9) sont montées pivotantes dans des fentes (11) pratiquées dans un des éléments latéraux de l'armature (3,5) et en ce que chaque organe de réglage (19) comprend une partie formant crochet (24,27) venant s'emboîter directement sur le fil d'aile correspondant (7,9) et une partie formant écrou (26) se déplaçant sur la vis de commande (17) correspondante.

2.  Siège selon la revendication 1, caractérisé en ce que le fil d'aile (7,9) comporte dans sa partie médiane un décrochement (12) de réception de la partie formant crochet (24,27) de l'organe de réglage.

3.  Siège selon la revendication 1, caractérisé en ce que la partie formant crochet de l'organe de réglage (19) comporte au moins deux crochets (24) situés de part et d'autre d'une lame élastique (25) d'appui sur ledit fil d'aile, destinée à maintenir les extrémités (13) dudit fil d'aile en position dans les fentes (11) de l'armature.

4.  Siège selon la revendication 1, caractérisé en ce que chaque fil d'aile (7,9) comporte une butée de verrouillage radial de chacune de ses extrémités (13) à l'intérieur de la fente (11) correspondante.

5.  Siège selon la revendication 4, caractérisé en ce que la butée de verrouillage est constituée par un ergot (14) en saillie vers l'extérieur du fil qui vient en appui sur la face intérieure de l'élément latéral d'armature.

6.  Siège selon la revendication 4, caractérisé en ce que la butée de verrouillage est constituée par le bord inférieur d'une encoche (15) ouverte vers l'extérieur du fil qui vient en appui sur le bord interne de la fente (11).

7.  Siège selon l'une quelconque des revendications 4 à 6, caractérisé en ce que l'organe de réglage (19) comporte au moins un crochet (27).

8.  Siège selon l'une quelconque des revendications 1 à 7, caractérisé en ce que les vis de commande (17) sont solidaires en rotation d'un câble de transmission (29) qui les relie.

9.  Siège suivant l'une quelconque des revendications 1 à 8, caractérisé en ce que le ou les fils d'aile (7,9) sont montés pivotants sur les montants latéraux de l'armature du dossier.

10. Siège suivant l'une quelconque des revendications 1 à 8, caractérisé en ce que le ou les fils d'aile sont montés pivotants sur les montants latéraux de l'armature de l'assise.

## Claims

1.  Motor vehicle seat having, on at least one lateral element (3, 5) of its frame (1), a wing wire (7, 9) pivoting at its two ends (13) relative to the said lateral element (3, 5) acting as a supporting element and connected to a member (19) for adjusting its angular position, movable axially on a rotary control screw (17) carried by the said supporting element, characterised in that the ends (13) of each wing wire (7, 9) are mounted pivotally in slots (11) made in one of the lateral elements of the frame (3, 5), and in that each adjusting member (19) comprises a part forming a hook (24, 27), engaging directly on the corresponding wing wire (7, 9), and a part forming a nut (26), moving on the corresponding control screw (17).

2.  Seat according to Claim 1, characterised in that the wing wire (7, 9) has, in its middle part, an offset (12) for receiving the part (24, 27) of the adjusting member forming a hook.

3.  Seat according to Claim 1, characterised in that the part of the adjusting member (19) forming a hook comprises at least two hooks (24) which are located on either side of an elastic strip (25) for bearing on the said wing wire and intended for keeping the ends (13) of the said wing wire in position in the slots (11) in the frame.

4.  Seat according to Claim 1, characterised in that each wing wire (7, 9) has a catch for the radial locking of each of its ends (13) inside the corresponding slot (11).

5.  Seat according to Claim 4, characterised in that the locking catch consists of a peg (14) projecting towards the outside of the wire and coming to bear on the inner face of the lateral frame element.

6. Seat according to Claim 4, characterised in that the locking catch consists of the lower edge of a notch (15) open towards the outside of the wire and coming to bear on the inner edge of the slot (11).

7. Seat according to any one of Claims 4 to 6, characterised in that the adjusting member (19) has at least one hook (27).

8. Seat according to any one of Claims 1 to 7, characterised in that the control screws (17) are integral in terms of rotation with a transmission cable (29) which connects them.

9. Seat according to any one of Claims 1 to 8, characterised in that the wing wire or wing wires (7, 9) are mounted pivotally on the lateral elements of the frame of the seat back.

10. Seat according to any one of Claims 1 to 8, characterised in that the wing wire or wing wires are mounted pivotally on the lateral elements of the frame of the sitting surface.

**Patentansprüche**

1. Kraftfahrzeugsitz, der auf mindestens einem Seitenteil (3, 5) seiner Armierung (1) ein Drahtteil (7, 9) aufweist, welches an seinen beiden Enden (13) bezüglich des als Halterungsteil wirkenden Seitenteils (3, 5) schwenkbar ist und mit einer Winkellageeinstelleinrichtung (19) verbunden ist, welche auf einer vom Halterungsteil gehalterten drehbaren Betätigungsschraube (17) axial bewegbar ist, dadurch gekennzeichnet, daß die Enden (13) jedes Drahtteils (7, 9) drehbar in Schlitzen (11) angebracht sind, welche in einem der Seitenteile der Armierung (3, 5) ausgebildet sind, und daß jede Einzelleinrichtung (19) ein als Haken (24, 27) ausgebildetes Teil, das direkt das entsprechende Drahtteil (7, 9) umschließt, und ein als Mutter ausgebildetes Teil (26), das sich auf der entsprechenden Betätigungsschraube (17) bewegt, aufweist.

2. Sitz nach Anspruch 1, dadurch gekennzeichnet, daß das Drahtteil (7, 9) in seinem mittleren Bereich einen Absatz (12) zur Aufnahme des als Haken (24, 27) ausgebildeten Teils der Einstelleinrichtung aufweist.

3. Sitz nach Anspruch 1, dadurch gekennzeichnet, daß das als Haken ausgebildete Teil der Einstelleinrichtung (19) wenigstens zwei Haken (24) aufweist, die beiderseits einer auf dem Drahtteil aufliegenden elastischen Zunge (25) angeordnet sind, welche dafür vorgesehen ist, die Enden (13) des Drahtteils in den Schlitzen (11) der Armierung zu halten.

4. Sitz nach Anspruch 1, dadurch gekennzeichnet, daß jedes Drahtteil (7, 9) einen Anschlag zum radialen Verriegeln jedes seiner Enden (13) im Inneren des entsprechenden Schlitzes (11) aufweist.

5. Sitz nach Anspruch 4, dadurch gekennzeichnet, daß der Verriegelungsanschlag durch einen vom Draht nach außen vorspringenden Nocken (14) gebildet ist, der auf der Innenseite des Seitenteils der Armierung zur Anlage kommt.

6. Sitz nach Anspruch 4, dadurch gekennzeichnet, daß der Verriegelungsanschlag von der Unterkante einer vom Draht nach außen hin offenen Einkerbung (15) gebildet wird, die am Innenrand des Schlitzes (11) zur Anlage kommt.

7. Sitz nach einem der Ansprüche 4-6, dadurch gekennzeichnet, daß die Einstelleinrichtung (19) wenigstens einen Haken (27) aufweist.

8. Sitz nach einem der Ansprüche 1-7, dadurch gekennzeichnet, daß die Betätigungsschrauben (17) mit einem sie verbindenden Bowdenzug (29) drehfest verbunden sind.

9. Sitz nach einem der Ansprüche 1-8, dadurch gekennzeichnet, daß das Drahtteil bzw. die Drahtteile (7, 9) schwenkbar auf den seitenholmen der Armierung der Lehne angebracht ist bzw. sind.

10. Sitz nach einem der Ansprüche 1-8, dadurch gekennzeichnet, daß das Drahtteil bzw. die Drahtteile schwenkbar auf den seitenholmen der Armierung des Sitzteils angebracht sind.

FIG.1

FIG. 2

FIG.3A

FIG.3

FIG.4